# EUROPÄISCHE PATENTSCHRIFT

(11) **EP 3 119 647 B1**
(45) Veröffentlichungstag und Bekanntmachung des Hinweises auf die Patenterteilung: **29.08.2018**
(21) Anmeldenummer: 15706823.0
(22) Anmeldetag: 27.02.2015
(51) Int. Cl.: B60R 25/25, B60R 25/24, B60R 25/20

(54) **VERFAHREN UND VORRICHTUNG ZUM BETÄTIGEN EINES SCHLIESSELEMENTS FÜR EIN FAHRZEUG**
METHOD AND DEVICE FOR ACTUATING A CLOSING ELEMENT FOR A VEHICLE
PROCÉDÉ ET DISPOSITIF POUR ACTIONNER UN ÉLÉMENT DE FERMETURE POUR UN VÉHICULE

(30) Priorität: 17.03.2014 DE 102014204914
(43) Veröffentlichungstag der Anmeldung: 25.01.2017
(73) Patentinhaber: Volkswagen Aktiengesellschaft, 38440 Wolfsburg (DE)
(72) Erfinder: ETTE, Bernd, 38442 Wolfsburg (DE)
(86) Internationale Anmeldenummer: PCT/EP2015/054140
(87) Internationale Veröffentlichungsnummer: WO 2015/139932

(56) Entgegenhaltungen:
- EP-A1- 2 860 704
- EP-A1- 2 860 718
- DE-A1-102008 025 669
- DE-A1-102009 023 594
- DE-A1-102009 040 395
- DE-A1-102011 051 434
- DE-B3-102005 032 402
- DE-U1-202005 020 140
- FR-A1- 2 979 873
- US-A1- 2009 309 714

## Beschreibung

Die vorliegende Erfindung betrifft ein Verfahren und eine Vorrichtung, um ein Schließelement (insbesondere eine Heckklappe) eines Fahrzeugs berührungslos zu betätigen.

Die FR 2 979 873 A1 offenbart das Öffnen eines bewegbaren Karosserieteils eines Fahrzeugs. Dabei wird ein Körperteil mit einem Sensor erfasst und nach einer Authentifizierung gesucht. Wenn eine Bewegung eines Fußes in einer vorbestimmten Weise von einem optischen Sensor erfasst wird, wird das Karosserieteil geöffnet.

Die DE 10 2005 032 402 B3 beschreibt eine Annäherungsdetektion einer Person an ein Fahrzeug mit einem optischen System.

Die DE 20 2005 020 140 U1 offenbart einen Öffnungsvorgang für eine Kraftfahrzeugtür, welcher durch eine Spracheingabe ausgelöst werden kann.

Die nachveröffentlichten EP 2 860 718 A1 und EP 2 860 704 A1 vom selben Anmelder beschreiben das Öffnen eines bewegbaren Karosserieteils eines Fahrzeugs. Dabei erfasst ein optischer Detektor die Annäherung einer Person in einen vordefinierten Bereich in der Nähe eines Fahrzeugs. Wenn diese Annäherung erfasst wurde, erfolgt eine Authentifizierung. Nur wenn die Authentifizierung erfolgreich war, wird mit optischen Sensoren überprüft, ob eine vorbestimmte Bewegung eines Menschen erfasst wird, um abhängig davon das Karosserieteil zu öffnen.

Die DE 10 2009 023 594 A1 offenbart die Betätigung eines Schließelements eines Fahrzeugs. Dabei wird das Schließelement betätigt, wenn eine vorgegebene Bewegung eines Objekts im Umgebungsbereich des Fahrzeugs und gleichzeitig ein dem Fahrzeug zugeordneter Fahrzeugschlüssel erfasst werden. Ein optischer Sensor wird nur dann aktiviert, wenn ein kapazitiver Sensor bereits einen Teil eines vorgegebenen Bewegungsprofils erfasst hat.

Die DE 10 2011 051 434 A1 beschreibt eine kapazitive Sensoranordnung zur Erfassung von Annäherungen und Bewegungsgesten eines Benutzers an einem Kraftfahrzeug. Dabei werden im energiereduzierten Modus befindliche Elektroden geweckt, wenn bei anderen Elektroden eine mögliche Betätigung registriert wird.

Die DE 10 2009 040 395 A1 offenbart ein Steuern einer Tür eines Fahrzeugs. Dabei wird die Tür entriegelt und/oder geöffnet, wenn ein vorbestimmtes Bewegungsmuster eines Objekts erkannt wird. Das Bewegungsmuster umfasst dabei eine Bewegung in zumindest zwei aufeinanderfolgenden unterschiedlichen Richtungen relativ zu dem Fahrzeug und ein Verweilen an einem Ort für eine vorbestimmte Zeitdauer.

Eine berührungslose Betätigung eines Schließelements eines Fahrzeugs nach dem Stand der Technik weist einen hohen Energieverbrauch auf, da zum einen ständig nach einem für das Fahrzeug berechtigten Funkschlüssel gesucht wird und da zum anderen die Sensormittel, mit welchen eine entsprechende Geste zur Betätigung des Schließelements erfasst wird, einen hohen Energieverbrauch aufweisen.

Daher stellt sich die vorliegende Erfindung die Aufgabe, den Energieverbrauch zur berührungslosen Betätigung eines Schließelements eines Fahrzeugs gegenüber dem Stand der Technik abzusenken.

Erfindungsgemäß wird diese Aufgabe durch ein Verfahren zum Betätigen eines Schließelements eines Fahrzeugs nach Anspruch 1 und durch eine Vorrichtung zum Betätigen eines Schließelements eines Fahrzeugs nach Anspruch 12 gelöst. Die abhängigen Ansprüche definieren bevorzugte und vorteilhafte Ausführungsformen der vorliegenden Erfindung.

Im Rahmen der vorliegenden Erfindung wird ein Verfahren zum Betätigen eines Schließelements eines Fahrzeugs bereitgestellt, welches folgende Schritte umfasst:
- Mit optischen Sensormitteln wird eine Annäherung eines Objekts an eine Stelle innerhalb eines Bereichs (z.B. Erfassungsbereich der optischen Sensormittel) erfasst.
- Nur wenn vorher die Annäherung des Objekts an die Stelle erfasst wurde, wird ein für das Fahrzeug berechtigter Funkschlüssel gesucht.
- Nur wenn der Funkschlüssel gefunden wurde (was bedingt, dass auch die Annäherung des Objekts korrekt erfasst wurde), werden weitere Sensormittel aktiviert.
- Mittels der weiteren Sensormittel wird eine Information erfasst.
- Das Schließelement wird nur betätigt, wenn die vorher erfasste Information eine oder mehrere bestimmte Bedingungen erfüllt.

Indem die energieintensive Suche nach dem berechtigten Funkschlüssel und auch die Aktivierung der weiteren Sensormittel nur erfolgen, wenn vorher erfolgreich die Annäherung des Objekts an die Stelle erfasst worden ist, wird im Normalfall (das heißt es liegt keine Annäherung vor) nur wenig Energie für die optischen Sensormittel zur Erfassung der Annäherung benötigt. Durch den Einsatz von optischen Sensormitteln zum Erfassen der Annäherung kann der Bereich vorteilhafterweise wesentlich größere Ausmaße annehmen, als dies bei dem Einsatz von anderen Sensormitteln (z.B. kapazitiven Sensoren) der Fall ist. Dabei überspannt der Bereich beispielsweise einen Bereich von einem Mindestabstand von 0,4 m bis zu einem Abstand von 2 m jeweils vom Fahrzeug.

Bei dem Schließelement kann es sich dabei um eine Klappe, eine Tür, ein Fenster oder ein Schiebedach des Fahrzeugs handeln.

Dabei umfasst die Annäherung des Objekts an die Stelle insbesondere eine gerichtete Bewegung des Objekts zu den optischen Sensormitteln.

Mit anderen Worten wird die Annäherung des Objekts nur dann als eine solche erfasst, wenn sich das Objekt in Form einer gerichteten Bewegung auf die optischen Sensormittel zu bewegt. D.h. die Richtung der Annäherung muss im Wesentlichen auf die optischen Sensormittel gerichtet sein, um erfindungsgemäß als Annäherung erfasst zu werden. Durch diese genauere Definition der Annäherung des Objekts gilt beispielsweise eine an dem Fahrzeug vorbei führende Bewegung eines Objekts nicht als Annäherung. Daher führen vorteilhafterweise am Fahrzeug vorbeilaufende Fußgänger oder vorbeifahrende Fahrzeuge nicht zu einer (erfolglosen) Suche nach dem Funkschlüssel oder zur Aktivierung der weiteren Sensormittel.

Für die weiteren Sensormittel existieren folgende Varianten:
- Die weiteren Sensormittel können beispielsweise einen Audioverstärker und/oder ein Mikrofon umfassen, so dass das Erfassen der Information eine Spracherkennung umfassen kann. Dadurch kann beispielsweise der Fahrer des Fahrzeugs das Schließelement durch einen entsprechenden Sprachbefehl betätigen.
- Die weiteren Sensormittel können weitere optische Sensormittel (beispielsweise eine Rückfahrkamera) umfassen, um damit den Bewegungsablauf bzw. die auszuführende Geste zu erfassen.
- Die weiteren Sensormittel können die optischen Sensormittel selbst umfassen, so dass beispielsweise auch nur die optischen Sensormittel vorhanden sein können, um das erfindungsgemäße Verfahren auszuführen. In diesem Fall sind die optischen Sensormittel nur teilweise aktiviert, um jederzeit die Annäherung des Objekts an eine Stelle im Erfassungsbereich zu erfassen. Nur wenn die Annäherung des Objekts positiv erfasst wurde und wenn zusätzlich der Funkschlüssel gefunden wurde, werden die optischen Sensormittel vollständig aktiviert. Die teilweise Aktivierung der optischen Sensormittel kann auch als passiver Betriebsmodus und die vollständige Aktivierung als aktiver Betriebsmodus der optischen Sensormittel angesehen werden.

Das Erfassen der Annäherung und damit das Erfassen des Bewegungsablaufs kann ein Erfassen eines Verweilens des Objekts an der Stelle über ein vorbestimmtes Zeitintervall umfassen. Mit anderen Worten wird die Annäherung nur dann als eine solche erfasst und der Bewegungsablauf genügt nur dann der mindestens einen Bedingung, wenn das Objekt mindestens eine vorbestimmte Zeitspanne (z.B. 0,4 s) stillsteht.

Damit der Bewegungsablauf den Bedingungen genügt, kann es darüber hinaus auch erforderlich sein, dass das Objekt nicht länger als eine vorbestimmte weitere Zeitspanne (z.B. 3 s) an der Stelle stillsteht. Mit anderen Worten führt ein Objekt, welches länger als die weitere Zeitspanne an der Stelle verharrt, zu einem Abbruch des erfindungsgemäßen Verfahrens, so dass das Schließelement nicht betätigt wird.

Gemäß einer bevorzugten erfindungsgemäßen Ausführungsform können Umwelteinflüsse (z.B. Regen) während des Erfassens der Annäherung erfasst werden. Diese Umwelteinflüsse können dann bei dem Erfassen der Information mit Hilfe der weiteren Sensormittel oder von der Auswertelogik des Bewegungsablaufs bzw. der Geste berücksichtigt werden.

Diese Ausführungsform sorgt vorteilhafterweise dafür, dass während der Annäherung erfasste Umwelteinflüsse sofort von den weiteren Sensormitteln berücksichtigt werden können, ohne dass die weiteren Sensormittel diese selbst erfassen müssen.

Insbesondere wird mit den optischen Sensormitteln ein Bewegungsablauf (Geste) des Objekts erfasst, welcher die Annäherung des Objekts und die erfasste Information umfasst. Nur wenn dieser Bewegungsablauf einer bestimmten Bedingung oder bestimmten Bedingungen genügt, wird das Schließelement betätigt (d.h. geöffnet oder geschlossen).

Wenn die Geste oder der Bewegungsablauf mit vollständig aktivierten Sensormitteln erfasst wird, kann die Geste bzw. der Bewegungsablauf sehr genau erfasst werden, was Fehler bei der Auswertung, ob der Bewegungsablauf der mindestens einen Bedingung genügt, nahezu ausschließt.

Das Aktivieren der weiteren Sensormittel kann zusätzlich ein Erzeugen einer optischen Markierung zur Lokalisierung der Stelle umfassen. Dabei kann das Erzeugen der optischen Markierung ein Einschalten einer Umfeldbeleuchtung des Fahrzeugs umfassen.

Die optische Markierung dient dabei nicht nur zur Lokalisierung der Stelle, sondern auch als ein Hinweis, dass ein erster Teil des Bewegungsablaufs, welcher zur Betätigung des Schließelements korrekt auszuführen ist, erfasst wurde. Die Erzeugung der optischen Markierung ist demnach auch eine Art Rückmeldung dafür, dass das erfindungsgemäße Verfahren zum Erfassen des (restlichen) Bewegungsablaufs oder einer Geste bereit ist.

Gemäß einer weiteren bevorzugten erfindungsgemäßen Ausführungsform umfassen die optischen Sensormittel mehrere Pixel, welche in Form einer Matrix (z.B. 30 Pixel * 30 Pixel) angeordnet sind. In diesem Fall können zeitlich aufeinanderfolgend verschiedene Pixel der optischen Sensormittel aktiviert werden, um anhand der Auswertung der von den aktivierten Pixeln erfassten Signale zu entscheiden, ob die Annäherung des Objekts an die Stelle vorliegt oder nicht. Unter einem Pixel wird dabei ein fotoempfindliches Bauelement verstanden.

Die teilweise Aktivierung der optischen Sensormittel umfasst bei dieser Ausführungsform die zeitlich aufeinanderfolgende Aktivierung verschiedener Pixel der Matrix. Wenn beispielsweise zu einem Zeitpunkt nur die Pixel einer der 30 Spalten oder nur ein Teil der Pixel einer der 30 Spalten aktiviert ist, kann im Vergleich zur Aktivierung aller Pixel der Matrix entscheidend Energie eingespart werden.

Jedes Pixel der Matrix korrespondiert mit einer bestimmten Fläche des Erfassungsbereiches, in welchem die Annäherung des Objekts von den optischen Sensormitteln erfasst werden kann. Der Erfassungsbereich kann dabei durch eine entsprechende Optik der Sensormittel eingestellt werden. Dabei sind die optischen Sensormittel insbesondere derart am Fahrzeug angebracht, dass die Pixel einer bestimmten Zeile am Rand der Matrix mit derjenigen Begrenzung des Erfassungsbereichs korrespondieren, welche den geringsten Abstand zum Fahrzeug aufweist. In diesem Fall korrespondieren linke Spalten der Matrix mit einem linken Seitenbereich des Erfassungsbereichs und rechte Spalten der Matrix mit einem rechten Seitenbereich des Erfassungsbereichs. Eine Person, welche von links nach rechts am Fahrzeug vorbei läuft, wird zuerst von den Pixeln der linken Spalte der Matrix und anschließend von den Pixeln der rechten Spalte der Matrix erfasst. Zum Erfassen der Annäherung können zeitlich aufeinanderfolgend die Pixel der rechten Spalten der Matrix aktiviert und ausgewertet werden. Dabei werden die Pixel spaltenweise von rechts nach links aktiviert und ausgewertet. Es wird mit den Pixeln der am weitesten rechts liegenden Spalte begonnen, wobei anschließend die Pixel der weiter rechts angrenzenden Spalte aktiviert und ausgewertet werden und anschließend die Pixel der nächsten weiter rechts angrenzenden Spalte aktiviert und ausgewertet werden usw., bis die Pixel einer Spalte im mittleren Bereich (z. B. die Pixel der Spalte 15 bei einer Matrix von 30 Spalten) aktiviert und ausgewertet worden sind. In ähnlicher Weise können die Pixel spaltenweise von links nach rechts aktiviert und ausgewertet werden. Dabei wird mit den Pixeln der am weitesten links liegenden Spalte begonnen, wobei anschließend die Pixel der weiter links angrenzenden Spalte aktiviert und ausgewertet werden und anschließend die Pixel der nächsten weiter links angrenzenden Spalte aktiviert und ausgewertet werden usw., bis die Pixel einer Spalte im mittleren Bereich (z. B. die Pixel der Spalte 16 bei einer Matrix von 30 Spalten) aktiviert und ausgewertet worden sind.

Auf diese Weise kann vorteilhafterweise eine sich von rechts bzw. links den optischen Sensormitteln bzw. dem Fahrzeug annähernde Person erfasst werden.

Dabei können beispielsweise die Pixel der rechten Spalten und die Pixel der linken Spalten abwechselnd aktiviert und ausgewertet werden, so dass beispielsweise zuerst alle Pixel der rechten (linken) Spalten zeitlich aufeinanderfolgend aktiviert und ausgewertet werden und anschließend alle Pixel der linken (rechten) Spalten zeitlich aufeinanderfolgend aktiviert und ausgewertet werden.

Bei einer Matrix mit 30 Spalten können beispielsweise innerhalb von einem vorbestimmten Zeitintervall (z.B. 200 ms) die Pixel der Spalten 1 bis 15 (d.h. die Pixel der Spalte 1, 2, 3 usw.) aufeinanderfolgend aktiviert und ausgewertet werden. Anschließend werden während des nächsten vorbestimmten Zeitintervalls die Pixel der Spalten 30 bis 16 (d.h. die Pixel der Spalten 30, 29, 28 usw.) aufeinanderfolgend aktiviert und ausgewertet. Mit anderen Worten sind zu einem bestimmten Zeitpunkt nur Pixel einer Spalte aktiviert.

Zur Entscheidung, ob die Annäherung des Objekts an die Stelle vorliegt, wird ein Flächenschwerpunkt ausgehend von allen Pixeln, welche aktuell das Objekt erfassen, berechnet. Dazu kann das jeweilige Pixel, welches das Objekt erfasst, anhand des entsprechenden Pixelwerts (z.B. einem Maß für die Wahrscheinlichkeit, dass das Pixel ein Objekt erfasst hat) gewichtet werden. Die Bewegung des Flächenschwerpunkts über der Zeit wird analysiert. Wenn sich der Flächenschwerpunkt zu der Stelle bewegt und an der Stelle das vorbestimmte Zeitintervall lang verweilt, wird positiv entschieden, dass sich das Objekt angenähert hat.

Durch die Auswertung der aktivierten Pixel und durch die Auswertung des Flächenschwerpunkts kann vorteilhafterweise zwischen folgenden Vorgängen oder Situationen zu unterscheiden:
- Das Objekt nähert sich der Stelle bzw. den optischen Sensormitteln an.
- Das Objekt verharrt unbeweglich.
- Das Objekt bewegt sich an dem Fahrzeug vorbei.

Durch die Auswertung der aktivierten Pixel können demnach verschiedene Vorgänge oder Situationen unterschieden werden. Dadurch ist es vorteilhafterweise möglich, bestimmte Situationen, wie beispielsweise ein sich an dem Fahrzeug vorbeibewegendes Objekt oder ein dauerhaft still stehendes Objekt, quasi auszufiltern, so dass in diesen Situationen weder ein Funkschlüssel gesucht noch die weiteren Sensormittel aktiviert werden müssen.

Zur Verbesserung der Empfindlichkeit und/oder zur Vergrößerung des Erfassungsbereichs können zur Annäherungserkennung auch Gruppen von benachbarten Pixeln zusammengefasst werden, wobei eine Gruppe dann quasi als ein vergrößertes Pixel angesehen werden kann.

Der Bewegungsablauf umfasst insbesondere eine Fußgeste, wobei der Bewegungsablauf erfindungsgemäß auch eine Handgeste umfassen könnte. Bei dem Objekt kann es sich um eine gesamte Person, aber auch nur um ein bestimmtes Körperteil einer Person (z.B. nur den Fuß oder nur die Fußspitze) handeln.

Im Rahmen der vorliegenden Erfindung wird auch eine Vorrichtung zum Betätigen eines Schließelements eines Fahrzeugs bereitgestellt. Dabei umfasst die Vorrichtung eine Steuerung, eine Funkantenne, optische Sensormittel und weiteren Sensormittel. Die optischen Sensormittel sind ausgestaltet, um eine Annäherung eines Objekts an eine Stelle in einem Erfassungsbereich der optischen Sensormittel zu erfassen. Die Funkantenne und die Steuerung sind ausgestaltet, um nur dann nach einem für das Fahrzeug berechtigten Funkschlüssel zu suchen, wenn vorher die Annäherung erfasst wurde. Darüber hinaus ist die Steuerung ausgestaltet, um die weiteren Sensormittel nur dann zu aktivieren, wenn vorher der Funkschlüssel gefunden wurde. Die weiteren Sensormittel und die Steuerung sind ausgestaltet, um eine Information zu erfassen. Schließlich ist die Vorrichtung ausgestaltet, das Schließelement zu betätigen, wenn die Steuerung bestimmt hat, dass die erfasste Information mindestens einer vorgegebenen Bedingung genügt.

Die Vorteile der erfindungsgemäßen Vorrichtung entsprechen im Wesentlichen den Vorteilen des erfindungsgemäßen Verfahrens, welche vorab im Detail ausgeführt sind, so dass hier auf eine Wiederholung verzichtet wird.

Die optischen Sensormittel umfassen insbesondere mehrere Pixel, welche in der Form einer zweidimensionalen Matrix angeordnet sind.

Dadurch kann die erfindungsgemäße Vorrichtung derart an einem Fahrzeug angeordnet werden, so dass Pixel der Matrix, welche jeweils eine Zeile der Matrix ausbilden, waagerecht bzw. horizontal bezüglich des Fahrzeugs und Pixel der Matrix, welche jeweils eine Spalte der Matrix ausbilden, senkrecht bzw. vertikal bezüglich des Fahrzeugs angeordnet sind.

Erfindungsgemäße Ausführungen umfassen jeweils auch eine Vorrichtung, welche zur Durchführung einer der vorab beschriebenen Varianten des erfindungsgemäßen Verfahrens ausgestaltet ist.

Schließlich umfasst die vorliegende Erfindung auch ein Fahrzeug, welches neben einem Schließelement eine erfindungsgemäße Vorrichtung umfasst.

Bevorzugte Einbauorte der optischen Sensormittel sind die Kennzeichenbeleuchtung in einer Heckklappe, eine hintere äußere Ecke, die B-Säule des Fahrzeugs oder in der Mitte des Hecks des Fahrzeugs.

Die vorliegende Erfindung ist zum Betätigen eines Schließelements eines Fahrzeugs geeignet. Selbstverständlich ist die vorliegende Erfindung nicht auf diesen bevorzugten Anwendungsbereich eingeschränkt, da die vorliegende Erfindung auch für Schiffe, Flugzeuge sowie gleisgebundene oder spurgeführte Fahrzeuge eingesetzt werden kann. Darüber hinaus ist es auch denkbar, die vorliegende Erfindung zur Betätigung eines Schließelements eines stationären Objektes (beispielsweise eines Hauses) einzusetzen.

Im Folgenden wird die vorliegende Erfindung anhand bevorzugter erfindungsgemäßer Ausführungsformen mit Bezug zu den Figuren im Detail beschrieben.

In Fig. 1 wird die vorliegende Erfindung anhand der Betätigung einer Heckklappe eines Fahrzeugs dargestellt.

In Fig. 2 ist schematisch der Erfassungsbereich eines optischen Sensors während der Annäherung eines Objekts dargestellt.

In Fig. 3 ist die Pixel-Matrix eines optischen Sensors während der Annäherung eines Objekts dargestellt.

In Fig. 4 ist der Aktionsbereich innerhalb der Pixel-Matrix dargestellt.

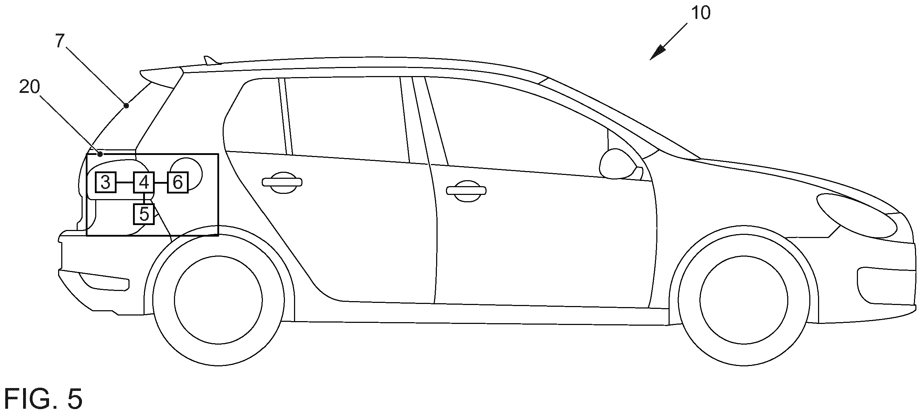

In Fig. 5 ist schematisch ein Fahrzeug mit einer erfindungsgemäßen Vorrichtung dargestellt.

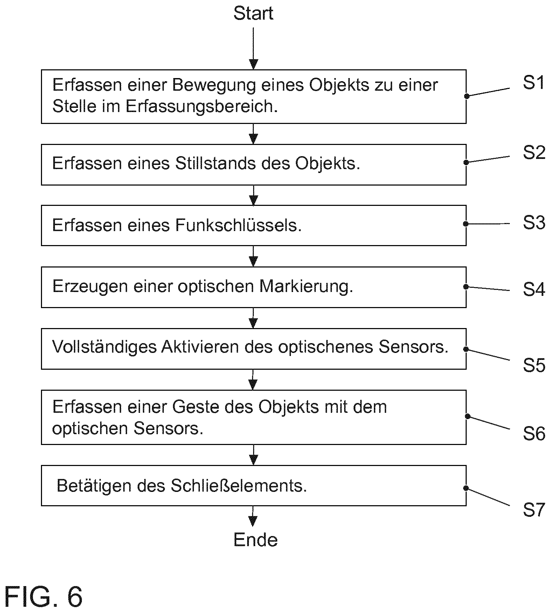

In Fig. 6 ist ein Flussplan eines erfindungsgemäßen Verfahrens dargestellt.

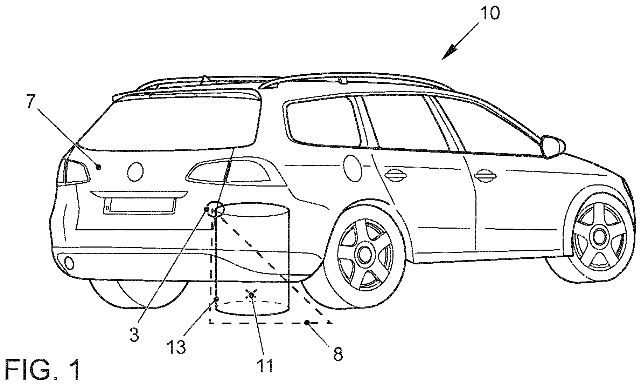

In Fig. 1 ist ein erfindungsgemäßes Fahrzeug 10 mit einer Heckklappe 7 dargestellt. An der rechten hinteren Ecke des Fahrzeugs auf der Höhe der Stoßstange befindet sich ein optischer Sensor 3, welcher Bewegungen in einem Erfassungsbereich 8 des Sensors 3 erfasst. Mit dem Bezugszeichen 13 ist ein Aktionsbereich 13 bezeichnet, in welchem nach einer erfolgreich erfassten Annäherung und Schlüsselsuche die Geste zur Betätigung der Heckklappe 7 zu erfassen ist. Für eine positiv erfasste Annäherung muss sich die Bedienperson der Stelle 11 bzw. dem optischen Sensor 3 annähern. Bei einer erfolgreichen Annäherung wird die Stelle 11 markiert, um die Bedienperson zu animieren, die Geste zur Betätigung der Heckklappe 7 an dieser Stelle 11 oder zumindest in dem Aktionsbereich 13 auszuführen.

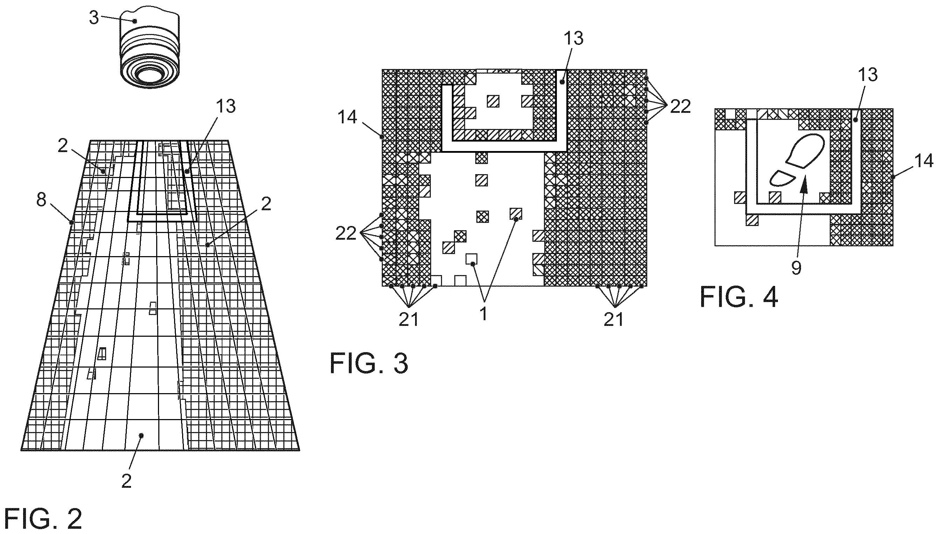

Wie anhand der Figuren 2 bis 4 im Detail erläutert wird, umfasst der optische Sensor 3 mehrere Pixel 1, welche in Form einer Matrix 14 angeordnet sind. Zur Annäherungserfassung bzw. Annäherungserkennung ist der optische Sensor 3 nur teilweise aktiviert, was bedeutet, dass pro Zeitintervall nur wenige Pixel 1 des optischen Sensors 3 mit Energie versorgt werden. Die Annäherungserkennung kann dabei in dem Erfassungsbereich 8 durchgeführt werden, während die Gestenerkennung (d.h. die Überprüfung, ob ein von dem optischen Sensor 3 erfasster Bewegungsablauf des Objekts den vorgegebenen Bedingungen entspricht) im Wesentlichen in dem Aktionsbereich 13 durchzuführen ist.

In Fig. 2 ist der optische Sensor 3 zusammen mit einem Erfassungsbereich 8 dargestellt. Der Erfassungsbereich 8 entspricht dem Bereich bzw. der Fläche in der Umgebung des Fahrzeugs, welcher mit dem optischen Sensor 3 überwacht wird. Jeder Flächenabschnitt 2 im Erfassungsbereich 8 korrespondiert mit einem Pixel 1 der Matrix 14 des optischen Sensors 3. Die waagerechte Reihe der Flächenabschnitte 2, welche in Fig. 2 am nächsten an dem optischen Sensor 3 angeordnet ist, korrespondiert mit den Pixeln 1 einer Zeile 22 der Matrix 14, welche in Fig. 3 am oberen Rand der Matrix 14 angeordnet ist. Demnach korrespondieren die Spalten 21 der Matrix 14 am rechten bzw. linken Rand der Matrix 14 mit den Flächenabschnitten 2 am rechten bzw. linken Rand des Erfassungsbereichs 8. Eine Person, welche sich von links nach rechts am Fahrzeug vorbei über den Erfassungsbereich 8 bewegt, wird demnach zuerst von den Pixeln 1 der linken Spalten 21 der Matrix 14 und anschließend von den Pixeln 1 der rechten Spalten 21 der Matrix 14 erfasst.

Mit dem Bezugszeichen 13 ist ein Aktionsbereich oder Fußerkennungsbereich bezeichnet, in welchem eine Fußgeste zur Betätigung eines Schließelements (z.B. der Heckklappe 7) des Fahrzeugs 10 auszuführen ist.

In Fig. 3 sind die Pixel 1 des optischen Sensors 3 in Form der Matrix 14 dargestellt. In Fig. 4 ist der Abschnitt der in Fig. 3 dargestellten Matrix 14 im Detail dargestellt, welcher den Aktionsbereich 14 umfasst. Nach einer erfolgreichen Annäherung und nach einer erfolgreichen Schlüsselsuche wird dieser Aktionsbereich 13 mit einem runden Laserspot an der Stelle 11 (siehe Fig. 1) markiert, um der Bedienperson zum einen zu signalisieren, dass die Annäherung und die Schlüsselsuche erfolgreich waren, und um der Bedienperson zum anderen zu zeigen, dass sie ihren Fuß 9 zur Betätigung des Schließelements 7 in diesen Aktionsbereich 13 (möglichst an die Stelle 11) stellen muss.

Sobald die Annäherung und die Schlüsselsuche erfolgreich erfasst werden, werden alle 30 * 30 Pixel des optischen Sensors 3 aktiviert, die zur Betätigung des Schließelements notwendige Geste (hier eine Fußgeste) zu erfassen. Bei der mit Figuren 2-4 dargestellten Ausführungsform wird mit dem vollständig aktivierten optischen Sensor 3 überprüft, ob die Bedienperson ihren Fuß in die Nähe der Stelle 11 innerhalb des Aktionsbereichs 13 stellt und wieder zurückzieht. Nur wenn dabei die Bewegung des Hinführens des Fußes 9 der Bewegung des Zurückführens des Fußes entspricht (beispielsweise sollten die Richtungen der beiden Bewegungen im Wesentlichen antiparallel sein), wird das Schließelement betätigt.

In Fig. 8 ist schematisch ein erfindungsgemäßes Fahrzeug 10 mit einer erfindungsgemäßen Vorrichtung 20 zur Betätigung einer Heckklappe 7 des Fahrzeugs 10 dargestellt.

Die Vorrichtung 20 umfasst ihrerseits eine Steuerung 4, den optischen Sensor 3, eine Funkantenne 5 und einen Laser 6. Während mit der Funkantenne 5 ein für das Fahrzeug 10 berechtigter Funkschlüssel erfasst werden kann, ist der Laser 6 ausgestaltet, um eine optische Markierung zur Lokalisierung der Stelle 11 im Erfassungsbereich 8 des optischen Sensors 3 (genauer im Aktionsbereich 13) zu erzeugen. Der Erfassungsbereich 8 zur Annäherungserkennung und der Aktionsbereich 13 zur Gestenerkennung können dabei jeweils durch eine geeignete Optik der Sensormittel 3 realisiert werden.

In Fig. 8 ist ein Flussplan eines erfindungsgemäßen Verfahrens zur Betätigung eines Schließelements 7 eines Fahrzeugs 10 dargestellt.

Im ersten Schritt S1 wird die Bewegung eines Objekts zu einer Stelle 11 im Erfassungsbereich 8 des optischen Sensors 3, d.h. eine Annäherung des Objekts, erfasst. Nur wenn diese zu dem optischen Sensor 3 hin gerichtete Bewegung im ersten Schritt S1 erfasst wird, wird im folgenden Schritt S2 überprüft, ob das Objekt zumindest für eine vorbestimmte Zeitspanne (z.B. 0,4 s) in der Nähe der Stelle ruht. Nur wenn die zu dem optischen Sensor 3 hin gerichtete Bewegung und der Stillstand des Objekts in den Schritten S1 und S2 erfasst wurden, wird ein für das Fahrzeug berechtigter Funkschlüssel im Bereich des optischen Sensors 3 im Schritt S3 gesucht.

Nur wenn im Schritt S3 der für das Fahrzeug berechtigte Funkschlüssel gefunden wurde, wird im folgenden Schritt S4 eine optische Markierung an der Stelle 11 erzeugt und der optische Sensor 3 im Schritt S5 vollständig aktiviert. Die optische Markierung signalisiert dem Benutzer, dass die Annäherung korrekt erfasst worden ist und dass der optische Sensor vollständig aktiviert ist (d.h. alle Pixel des Sensors 3 arbeiten und sind in der Lage, das Objekt zu erfassen), um den folgenden Bewegungsablauf des Objektes zu erfassen.

Das Erfassen der Geste bzw. des Bewegungsablaufs des Objekts wird im Schritt S6 mit dem optischen Sensor 3 durchgeführt. Wenn dieser Bewegungsablauf den vorgegebenen Bedingungen genügt, wird das Schließelement im Schritt S7 betätigt.

### Bezugszeichenliste

- 1: Pixel
- 2: Flächenabschnitt
- 3: optischer Sensor
- 4: Steuerung
- 5: Funkantenne
- 6: Laser
- 7: Heckklappe
- 8: Erfassungsbereich
- 9: Fuß
- 10: Fahrzeug
- 11: Stelle
- 13: Aktionsbereich
- 14: Matrix
- 20: Vorrichtung
- 21: Spalte der Matrix
- 22: Zeile der Matrix
- S1-S7: Verfahrensschritt

## Patentansprüche

1. Verfahren zum Betätigen eines Schließelements (7) eines Fahrzeugs (10), folgende Schritte umfassend:
optisches Erfassen einer Annäherung eines Objekts an eine Stelle (11) in einem Bereich (8),
Suchen eines Funkschlüssels, welcher für das Fahrzeug (10) berechtigt ist, nur wenn vorab die Annäherung erfasst wurde,
Aktivieren weiterer Sensormittel (3), nur wenn der Funkschlüssel gefunden wurde, Erfassen einer Information mittels der weiteren Sensormittel (3), und
Betätigen des Schließelements (7), wenn die erfasste Information mindestens einer vorgegebenen Bedingung genügt,
wobei ein Flächenschwerpunkt ausgehend von allen Pixeln (1), welche aktuell das Objekt erfassen, berechnet wird,
wobei eine Bewegung des Flächenschwerpunkts über der Zeit analysiert wird, und
wobei die Annäherung des Objekts erfasst wird, wenn sich der Flächenschwerpunkt zu der Stelle (11) bewegt und an der Stelle (11) für ein vorbestimmtes Zeitintervall verweilt.

2. Verfahren nach Anspruch 1, **dadurch gekennzeichnet, dass** das optische Erfassen der Annäherung des Objekts an die Stelle (11) ein optisches Erfassen einer gerichteten Bewegung des Objekts zu optischen Sensormitteln (3) umfasst, mittels welchen das optische Erfassen durchgeführt wird.

3. Verfahren nach Anspruch 1 oder 2, **dadurch gekennzeichnet, dass** das Erfassen einer Information mittels der weiteren Sensormittel (3) eine Spracherkennung umfasst.

4. Verfahren nach einem der vorhergehenden Ansprüche,
**dadurch gekennzeichnet,**
**dass** das Erfassen der Annäherung ein Erfassen eines Verweilens des Objektes für ein vorbestimmtes Zeitintervall an der Stelle (11) umfasst.

5. Verfahren nach einem der vorhergehenden Ansprüche,
**dadurch gekennzeichnet,**
**dass** das Erfassen der Annäherung ein Erfassen von Umwelteinflüssen umfasst, und dass die Umwelteinflüsse bei dem Erfassen der Information berücksichtigt werden.

6. Verfahren nach einem der vorhergehenden Ansprüche,
**dadurch gekennzeichnet,**
**dass** die weiteren Sensormittel optische Sensormittel (3) umfassen,
**dass** für das Erfassen der Annäherung die optischen Sensormittel (3) nur teilweise aktiviert werden, und
**dass** das Aktivieren der weiteren Sensormittel ein vollständiges Aktivieren der optischen Sensormittel (3) umfasst.

7. Verfahren nach Anspruch 6,
**dadurch gekennzeichnet,**
**dass** ein Bewegungsablauf des Objekts erfasst wird,
**dass** der Bewegungsablauf die Annäherung des Objekts und die Information umfasst, und dass das Schließelement (7) nur betätigt wird, wenn der Bewegungsablauf der mindestens einen Bedingung genügt.

8. Verfahren nach Anspruch 6 oder 7,
**dadurch gekennzeichnet,**
**dass** das Aktivieren der weiteren Sensormittel (3) ein Erzeugen einer optischen Markierung zur Lokalisierung der Stelle (11) umfasst.

9. Verfahren nach einem der Ansprüche 6-8,
**dadurch gekennzeichnet,**
**dass** das Erfassen der Annäherung eine zeitlich aufeinanderfolgende Aktivierung und Auswertung verschiedener Pixel (1) der optischen Sensormittel (3) umfasst.

10. Verfahren nach Anspruch 9,
**dadurch gekennzeichnet,**
**dass** die Pixel (1) in Form einer Matrix (14) angeordnet sind,
**dass** linke Spalten (21) der Matrix (14) mit einem linken Seitenbereich eines Erfassungsbereichs (8) korrespondieren,
**dass** rechte Spalten (21) der Matrix (14) mit einem rechten Seitenbereich des Erfassungsbereichs (8) korrespondieren,
**dass** der Erfassungsbereich (8) einen Bereich definiert, in welchem ein Objekt (9) von den optischen Sensormitteln (3) erfasst wird,
**dass** zeitlich aufeinanderfolgend Pixel (1) der rechten Spalten (21) aktiviert und ausgewertet werden, wobei mit den Pixeln (1) der am weitesten rechts liegenden Spalte begonnen wird und dann in Richtung der mittleren Spalte der Matrix (14) mit weiter in der Mitte liegenden Spalten fortgesetzt wird, und/oder
**dass** zeitlich aufeinanderfolgend Pixel (1) der linken Spalten (21) aktiviert und ausgewertet werden, wobei mit den Pixeln (1) der am weitesten links liegenden Spalte begonnen wird und dann in Richtung der mittleren Spalte der Matrix mit weiter in der Mitte liegenden Spalten fortgesetzt wird.

11. Verfahren nach Anspruch 10,
**dadurch gekennzeichnet,**
**dass** die Pixel (1) der rechten Spalten und die Pixel (1) der linken Spalten abwechselnd aktiviert und ausgewertet werden, so dass zuerst alle Pixel der rechten Spalten zeitlich aufeinanderfolgend aktiviert und ausgewertet werden und anschließend alle Pixel der linken Spalten zeitlich aufeinanderfolgend aktiviert und ausgewertet werden.

12. Vorrichtung zum Betätigen eines Schließelements (7) eines Fahrzeugs (10),
wobei die Vorrichtung (20) eine Steuerung (4), eine Funkantenne (5), optische Sensormittel (3) und weitere Sensormittel (3) umfasst,
wobei die optischen Sensormittel (3) ausgestaltet sind, um eine Annäherung eines Objekts an eine Stelle (11) in einem Bereich (8) zu erfassen,
wobei die Funkantenne (5) und die Steuerung /4) ausgestaltet sind, um nur dann einen Funkschlüssel zu suchen, welcher für das Fahrzeug (10) berechtigt ist, wenn die Annäherung erfasst wurde,
wobei die Steuerung (4) ausgestaltet ist, um die weiteren Sensormittel (3) nur zu aktivieren, wenn der Funkschlüssel gefunden wurde,
wobei die weiteren Sensormittel (3) und die Steuerung (4) ausgestaltet sind, um eine Information zu erfassen,
wobei die Vorrichtung (20) ausgestaltet ist, um das Schließelement (7) zu betätigen, wenn die Steuerung (4) entschieden hat, dass die erfasste Information mindestens einer vorgegebenen Bedingung genügt,
wobei die Vorrichtung (20) ausgestaltet ist, um einen Flächenschwerpunkt ausgehend von allen Pixeln (1), welche aktuell das Objekt erfassen, zu berechnen,
wobei die Vorrichtung (20) ausgestaltet ist, um eine Bewegung des Flächenschwerpunkts über der Zeit zu analysieren, und
wobei die Vorrichtung (20) ausgestaltet ist, um die Annäherung des Objekts zu erfassen, wenn sich der Flächenschwerpunkt zu der Stelle (11) bewegt und an der Stelle (11) für ein vorbestimmtes Zeitintervall verweilt.

13. Vorrichtung nach Anspruch 12,
**dadurch gekennzeichnet,**
**dass** die optischen Sensormittel (3) Pixel umfassen, welche in Form einer Matrix (14) angeordnet sind.

## Claims

1. Method for the actuation of a closing element (7) of a vehicle (10), comprising the following steps:
optical detection of an approach of an object to a position (11) in a region (8),
searching for a radio key that is authorized for the vehicle (10) only if the approach has previously been detected,
activation of further sensor means (3) only if the radio key has been found,
detection of information by means of the further sensor means (3), and
actuation of the closing element (7) if the detected information meets at least one predetermined condition,
wherein a centroid of an area is calculated starting from all pixels (1) that are currently detecting the object,
wherein a displacement of the centroid of an area against time is analyzed, and
wherein the approach of the object is detected if the centroid of an area moves to the position (11) and dwells at the position (11) for a predetermined time interval.

2. Method according to Claim 1, **characterized in that** the detection of the approach of the object towards the position (11) comprises the optical detection of a directed displacement of the object towards the optical sensor means (3) with which the optical detection is carried out.

3. Method according to Claim 1 or 2, **characterized in that** the detection of the information by means of the further sensor means (3) comprises voice recognition.

4. Method according to any one of the preceding claims,
**characterized in that**
the detection of the approach comprises the detection of the object dwelling at the position (11) for a predetermined time interval.

5. Method according to any one of the preceding claims,
**characterized in that**
the detection of the approach comprises the detection of ambient influences, and the ambient influences are taken into account during the detection of the information.

6. Method according to any one of the preceding claims,
**characterized in that**
the further sensor means comprise optical sensor means (3),
the optical sensor means (3) are only partially activated for the detection of the approach, and
the activation of the further sensor means comprises full activation of the optical sensor means (3).

7. Method according to Claim 6,
**characterized in that**
a displacement profile of the object is detected,
the displacement profile comprises the approach of the object and the information, and
the closing element (7) is only actuated if the displacement profile meets the at least one condition.

8. Method according to Claim 6 or 7,
**characterized in that**
the activation of the further sensor means (3) comprises the generation of a visual marker for localizing the position (11).

9. Method according to any one of Claims 6-8,
**characterized in that**
the detection of the approach comprises the activation and analysis of different pixels (1) of the optical sensor means (3) successively against time.

10. Method according to Claim 9,
**characterized in that**
the pixels (1) are disposed in the form of a matrix (14), left columns (21) of the matrix (14) correspond to a left side region of a detection region (8),
right columns (21) of the matrix (14) correspond to a right side region of the detection region (8),
the detection region (8) defines a region in which an object (9) is detected by the optical sensor means (3), pixels (1) of the right column (21) are activated and analyzed successively against time, wherein this is commenced with the pixels (1) of the column lying furthest to the right and then proceeds in the direction of the middle column of the matrix (14) with columns lying further in the middle, and/or
pixels (1) of the left columns (21) are activated and analyzed successively against time, wherein this is commenced with the pixels (1) of the column lying furthest to the left and then proceeds in the direction of the middle column of the matrix with columns lying further in the middle.

11. Method according to Claim 10.
**characterized in that**
the pixels (1) of the right columns and the pixels (1) of the left columns are alternately activated and analyzed so that first all pixels of the right columns are activated and analyzed successively against time then all pixels of the left columns are activated and analyzed successively against time.

12. Device for the actuation of a closing element (7) of a vehicle (10), wherein the device (20) comprises a controller (4), a radio antenna (5), optical sensor means (3) and further sensor means (3),
wherein the optical sensor means (3) are configured to detect an approach of an object to a position (11) in a region (8),
wherein the radio antenna (5) and the controller (4) are configured to only then search for a radio key that is authorized for the vehicle (10) if the approach has been detected,
wherein the controller (4) is configured to activate the further sensor means (3) only if the radio key has been found,
wherein the further sensor means (3) and the controller (4) are configured to detect information,
wherein the device (20) is configured to actuate the closing element (7) if the controller (4) has decided that the detected information meets at least one predetermined condition,
wherein the device (20) is configured to calculate a centroid of an area starting from all pixels (1) that are currently detecting the object,
wherein the device (20) is configured to analyze a displacement of the centroid of an area against time, and wherein the device (20) is configured to detect the approach of the object if the centroid of an area moves to the position (11) for a predetermined time interval.

13. Device according to Claim 12,
**characterized in that**
the optical sensor means (3) comprise pixels that are disposed in the form of a matrix (14).

## Revendications

1. Procédé pour actionner un élément de fermeture (7) d'un véhicule (10), comprenant les étapes consistant à :
détecter optiquement le rapprochement d'un objet d'un emplacement (11) dans une zone (8),
rechercher une clé à radiocommande autorisée pour le véhicule (10) uniquement en cas de détection préalable du rapprochement,
activer d'autres moyens de détection (3) uniquement lorsque la clé à radiocommande a été trouvée,
détecter une information à l'aide des autres moyens de détection (3), et
actionner l'élément de fermeture (7) lorsque l'information détectée satisfait à au moins une condition prédéfinie,
dans lequel un centre de gravité de surface est calculé à partir de tous les pixels (1) qui détectent actuellement l'objet,
dans lequel un mouvement du centre de gravité de surface est analysé au cours du temps, et
dans lequel le rapprochement de l'objet est détecté lorsque le centre de gravité de surface se déplace vers l'emplacement (11) et reste à l'emplacement (11) pendant un intervalle de temps prédéterminé.

2. Procédé selon la revendication 1, **caractérisé en ce que** la détection optique du rapprochement de l'objet vers l'emplacement (11) consiste à détecter optiquement un mouvement dirigé de l'objet vers des moyens de détection optique (3) au moyen desquels la détection optique est effectuée.

3. Procédé selon la revendication 1 ou 2, **caractérisé**
**en ce que** la détection d'une information au moyen des autres moyens de détection (3) comprend une reconnaissance vocale.

4. Procédé selon l'une des revendications précédentes,
**caractérisé en ce que** la détection du rapprochement consiste à détecter le fait que l'objet reste à l'emplacement (11) pendant un intervalle de temps prédéterminé.

5. Procédé selon l'une des revendications précédentes,
**caractérisé en ce que** la détection du rapprochement consiste à détecter des influences de l'environnement, et **en ce que** les influences de l'environnement sont prises en compte lors de la détection de l'information.

6. Procédé selon l'une des revendications précédentes,
**caractérisé en ce que** les autres moyens de détection comprennent des moyens de détection optiques (3),
**en ce que** les moyens de détection optiques (3) ne sont activés que partiellement pour détecter le rapprochement, et
**en ce que** l'activation des autres moyens de détection consiste à activer entièrement les moyens de détection optiques (3).

7. Procédé selon la revendication 6,
**caractérisé**
**en ce qu'**une séquence de mouvement de l'objet est détectée,
**en ce que** la séquence de mouvement comprend le rapprochement de l'objet et l'information, et
**en ce que** l'élément de fermeture (7) n'est actionné que si la séquence de mouvement satisfait à l'au moins une condition.

8. Procédé selon la revendication 6 ou 7,
**caractérisé en ce que** l'activation des autres moyens de détection (3) consiste à générer un marquage optique permettant de localiser l'emplacement (11).

9. Procédé selon l'une des revendications 6-8,
**caractérisé en ce que** la détection du rapprochement consiste à activer et à évaluer successivement dans le temps différents pixels (1) des moyens de détection optiques (3).

10. Procédé selon la revendication 9,
**caractérisé**
**en ce que** les pixels (1) sont disposés sous la forme d'une matrice (14),
**en ce que** les colonnes de gauche (21) de la matrice (14) correspondent à une zone de gauche d'une zone de détection (8),
**en ce que** les colonnes de droite (21) de la matrice (14) correspondent à une zone de droite de la zone de détection (8),
**en ce que** la zone de détection (8) définit une zone dans laquelle un objet (9) est détecté par les moyens de détection optiques (3),
**en ce que** des pixels (1) des colonnes de droite (21) sont activés et évalués successivement dans le temps, en commençant par les pixels (1) de la colonne la plus à droite et en continuant dans la direction de la colonne centrale de la matrice (14) avec des colonnes situées plus loin vers le centre, et/ou
**en ce que** des pixels (1) des colonnes de gauche (21) sont activés et évalués successivement dans le temps, en commençant par les pixels (1) de la colonne la plus à gauche et en continuant dans la direction de la colonne centrale de la matrice avec des colonnes situées plus loin vers le centre.

11. Procédé selon la revendication 10,
**caractérisé en ce que** les pixels (1) des colonnes de droite et les pixels (1) des colonnes de gauche sont activés et évalués alternativement, de manière à ce que tous les pixels des colonnes de droite soient d'abord activés et évalués successivement dans le temps, puis à ce que tous les pixels des colonnes de gauche soient activés et évalués successivement dans le temps.

12. Dispositif pour actionner un élément de fermeture (7) d'un véhicule (10),
dans lequel le dispositif (20) comprend un dispositif de commande (4), une antenne radio (5), des moyens de détection optiques (3) et d'autres moyens de détection (3),
dans lequel les moyens de détection optiques (3) sont conçus pour détecter le rapprochement d'un objet d'un emplacement (11) dans une zone (8),
dans lequel l'antenne radio (5) et le dispositif de commande (4) sont conçus pour rechercher une clé à radiocommande autorisée pour le véhicule (10) uniquement lorsque le rapprochement a été détecté,
dans lequel le dispositif de commande (4) est conçu pour activer les autres moyens de détection (3) uniquement lorsque la clé à radiocommande a été trouvée,
dans lequel les autres moyens de détection (3) et le dispositif de commande (4) sont conçus pour détecter une information,
dans lequel le dispositif (20) est conçu pour actionner l'élément de fermeture (7) lorsque le dispositif de commande (4) a décidé que l'information détectée satisfait à au moins une condition prédéterminée,
dans lequel le dispositif (20) est conçu pour calculer un centre de gravité de surface à partir de tous les pixels (1) qui détectent actuellement l'objet,
dans lequel le dispositif (20) est conçu pour analyser au cours du temps un mouvement du centre de gravité de surface, et
dans lequel le dispositif (20) est conçu pour détecter le rapprochement de l'objet lorsque le centre de gravité de surface se déplace vers ledit emplacement (11) et reste à cet emplacement (11) pendant un intervalle de temps prédéterminé.

13. Dispositif selon la revendication 12,
**caractérisé en ce que** les moyens de détection optiques (3) comprennent des pixels disposés sous la forme d'une matrice (14).
